# FASCICULE DE BREVET EUROPEEN

(11) **EP 3 844 452 B1**
(45) Date de publication et mention de la délivrance du brevet: **14.09.2022**
(21) Numéro de dépôt: 19779063.7
(22) Date de dépôt: 02.09.2019
(51) Int. Cl.: F28D 20/02, H01M 10/65, B60L 58/24

(54) **STRUCTURE DE GESTION THERMIQUE A CANAUX INTEGRES**
WÄRMEVERWALTUNGSSTRUKTUR MIT INTEGRIERTEN KANÄLEN
THERMAL MANAGEMENT STRUCTURE WITH INTEGRATED CHANNELS

(30) Priorité: 31.08.2018 FR 1857878
(43) Date de publication de la demande: 07.07.2021
(73) Titulaire: HUTCHINSON, 75008 Paris (FR)
(72) Inventeur: CHOPARD, Fabrice, 38400 SAINT MARTIN D'HERES (FR); BLANCHARD, Clément, 45200 AMILLY (FR)
(74) Mandataire: Ernest Gutmann - Yves Plasseraud S.A.S.
(86) Numéro de dépôt international: PCT/FR2019/052013
(87) Numéro de publication internationale: WO 2020/044002

(56) Documents cités:
- FR-A1- 3 039 561
- FR-A1- 3 063 137
- FR-A3- 3 015 780

## Description

La présente invention concerne le domaine de la gestion thermique.

Est en particulier concerné un dispositif de gestion thermique (appelé aussi barrière thermique) prévu pour favoriser, dans un volume intérieur que cette barrière entoure ou borde, sur au moins un côté, et/ou vis-à-vis d'un élément producteur temporaire de chaleur qui y est disposé, une gestion de la température.

Sont de la sorte en particulier concernés, notamment sur un véhicule, les tuyaux, conduits ou durites, dans lesquels circulent des fluides, tels que de l'air ou de l'huile, ou un fluide frigorigène (comme du R1234 yf) ou encore les installations électriques qui chauffent, telles que les batteries d'accumulateurs électriques, ou encore des parties de moteur dont la température est à gérer :
- situations où il faut favoriser une montée rapide en température, comme lors d'un démarrage à froid,
- situations où il faut favoriser un refroidissement de ladite partie de moteur, comme en fonctionnement ultérieur stabilisé.

Dans le présent texte vont avoir pour sens:
- MCP : un matériau à changement de phase qui change d'état physique (typiquement entre liquide et solide) dans une plage de température restreinte, et absorbe jusqu'à un certain seuil une variation de température en emmagasinant l'énergie reçue; typiquement une hausse de température transmise par une élévation de température d'au moins une cellule,
- isolant thermique : un matériau de conductivité thermique ≤ à 0.5 W/mK, conduisant moins bien la chaleur qu'un MCP lorsqu'il se trouve dans une phase où il est le moins conducteur thermique, et
- thermiquement conducteur : un matériau de conductivité thermique ≥ à 1 W/mK.

En tant que MCP, on pourra trouver :
- un/des MCP « chaud(s) » ayant une température de fusion comprise entre plus de 22°C et 38°C, et de préférence entre plus de 25°C et 37°C. Ce type de MCP peut être utilisé lors des roulages estivaux et notamment lorsque les températures extérieures sont supérieures à 40°C. En fondant, le MCP emmagasine les calories venues de l'extérieur et crée une première barrière thermique ;
- un/des MCP « froid(s) » ayant une température de fusion comprises entre 14°C et moins de 26°C, et de préférence entre 15°C et moins de 25°C. Ce type de MCP peut être utilisé lors des roulages hivernaux, notamment lorsque les températures sont négatives. En cristallisant, les MCP relâchent des calories qui réchauffent le pack batterie ; voire
- un/des MCP utilisé, en contact thermique direct avec les cellules, typiquement un MCP ayant une température de fusion précise, typiquement 35°C, car on peut chercher à créer un palier sur une plage de température jugée actuellement haute des cellules, dans le but d'éviter une propagation thermique entre cellules (effet tampon).

Dans une batterie, il peut être très utile de pouvoir réguler la température opérationnelle des cellules qui chauffent quand elles produisent du courant et qui favorablement doivent rester dans une plage de température précises quelles que soient les conditions de températures extérieures même lorsque les cellules sont à l'arrêt.

Dans un tuyau d'air raccordant deux zones chaudes d'un moteur thermique, par exemple, la température dans le volume interne du tuyau peut être à réguler.

Dans un carter moteur, après une phase de démarrage à froid, évacuer, ou plutôt transférer des calories peut être utile.

Dans ce contexte, on conçoit donc qu'il puisse être nécessaire, suivant les situations :
- d'isoler de l'environnement extérieur ou de gérer l'évolution de température d'un volume intérieur et/ou son contenu,
- et/ou de retarder ou au contraire favoriser la propagation d'un flux thermique hors ou vers ce volume.

Faire circuler un fluide dans une structure adaptée à participer à cette gestion thermique peut alors être également nécessaire.

Il existe de telles structures qui présentent pour cela des passages de circulation de fluide, établis entre deux couches de matière, entre une entrée et une sortie pour le fluide, de façon que, vis-à-vis du fluide, soit obtenue une isolation thermique - si les couches sont thermiquement isolantes - ou un échange thermique - par exemple si les couches contiennent un MCP, dénomination convenue pour un matériau à changement de phase, PCM en anglais, à changement d'états par exemple entre liquide et solide.

Ainsi, FR3015780 divulgue l'utilisation de canaux fluidiques disposés dans du MCP et permettant une circulation d'un fluide caloporteur, notamment liquide. Les canaux fluidiques sont formés dans un bloc rigide permettant de les maintenir en place lorsque le matériau à changement de phase MCP passe à l'état liquide.

Il s'agit là d'un ensemble assez complexe à fabriquer. En outre rien n'indique comment obtenir la forme des couches de MCP ni celle du « bloc rigide » permettant de maintenir en place les canaux fluidiques.

Ainsi, parmi les problèmes que l'on a souhaité ici résoudre apparait celui lié à la réalisation performante des structures, ou ensembles, adapté(e)s à participer à une gestion thermique environnante.

Le document FR 3 063 137 A1 divulgue une structure comprenant des éléments de gestion thermique de l'état de l'art selon le préambule de la revendication 1.

Une solution proposée selon la présente invention consiste dans une structure comprenant au moins un élément de gestion thermique comprenant :
- un corps composite contenant au moins un matériau à changement de phase (MCP) dans une matrice rigide structurante, de sorte que le corps composite est autoportant quelle que soit la phase du matériau à changement de phase contenu,
   le corps composite étant conformé pour localement présenter extérieurement au moins un dit creux qui définit par lui-même une paroi de canal pouvant convenir à la circulation d'un fluide,
   le corps composite définissant un plateau qui présente une épaisseur (e) et sur au moins une des faces duquel s'étendent les canaux formés par les creux, et
   entre les canaux, des passages sont formés dans l'épaisseur (e) du plateau pour recevoir des éléments extérieurs à placer en échange thermique avec le fluide à faire circuler dans les canaux.

Ainsi, on combinera l'intérêt (en poids, finesse et facilité de mise en en forme) du corps composite avec la réalisation de plateaux à canaux intégrés de circulation de fluide.

Aux mêmes fins, il est aussi proposé un ensemble de dites structures comprenant plusieurs structures comme ci-avant dans lesquelles lesdits canaux sont disposés dos à dos, sur deux faces de chaque plateau opposées suivant l'épaisseur (e), les plateaux étant empilés, les uns en appui sur les autres entre les canaux d'une même dite face, de sorte qu'un dit plateau forme un couvercle pour le plateau adjacent, en créant ainsi desdits canaux à section fermée.

On réalise alors un ensemble modulaire dont la forme et les dimensions peuvent être aisément adaptées aux nombre et dimensions des cellules de la batterie.

L'épaisseur (e) est alors définie parallèlement à la direction d'empilements des plateaux ou, si chaque plateau est plan, perpendiculairement au plan de chaque plateau.

Est aussi concerné un assemblage comprenant :
- l'ensemble ci-avant, dans lequel les passages traversent les plateaux, et
- en tant que dits éléments extérieurs, des cellules d'une batterie électrique de véhicule disposées dans les passages successifs des plateaux empilés.

Est aussi visé le fait que cet assemblage puisse être tel :
- que lesdites cellules soient disposées en échange thermique avec les plateaux sur des premiers côtés des cellules, les canaux étant alors reliés à une première alimentation en fluide à faire circuler dans lesdits canaux, et
- que soit incluse en outre une plaque de refroidissement disposée en échange thermique avec les cellules sur des deuxièmes côtés de celles-ci, la plaque de refroidissement présentant des conduits qui sont reliés à une deuxième alimentation en un fluide à faire circuler dans lesdits conduits, pour un échange thermique de surface avec les cellules.

On renforcera encore la gestion thermique des cellules, dans d'autres conditions, puisque la une plaque de refroidissement sera a priori sans MCP.

Aussi concerné, l'assemblage :
- dans lequel les cellules, qui sont cylindriques, s'étendront dans les passages successifs des plateaux empilés jusqu'à une base de chaque cellule, et
- où la plaque de refroidissement est disposée en échange thermique avec les bases des cellules.

Dans la présente solution, il n'y a ni canaux fluidiques disposés dans du MCP (les canaux sont séparés du MCP par le matériau du corps composite. De fait, il n'y a plus ni nécessité d'éléments structurels rapportés pour définir les canaux fluidiques en eux-mêmes, au sein d'un élément structurel intermédiaire rigide également rapporté (dont on peut aussi se dispenser) ni risque d'altération de tenue mécanique de la structure, qui est autoportante ne serait-ce que du fait desdits creux.

A toute fin, il est à cette étape :
- confirmé qu'un matériau à changement de phase - ou MCP - désigne ici tout matériau capable de changer d'état physique, entre par exemple solide et liquide ou solide et gazeux, dans une plage de température restreinte comprise entre -50°C et 50°C, voire entre -60°C et 150°C, compte tenu des applications privilégiés qui peuvent se présenter dans le domaine des véhicules ou engins (terrestres, aériens, maritimes ou fluviaux). Le transfert de chaleur (ou transfert thermique) peut s'opérer par utilisation de sa Chaleur Latente (CL) : le matériau peut stocker ou céder de l'énergie par simple changement d'état, tout en conservant une température sensiblement constante, celle du changement d'état.

En liaison avec l'utilisation d'une matrice rigide structurante, il a été cherché à définir des solutions qui satisfassent à la problématique suivante posée : réalisation industrielle en grande série, masse réduite, découpe aisée et précise pour mise en forme à souhait, faible coût, performance thermique (conductivité thermique adaptée, notamment dans un environnement « batterie »), maintien du matériau à changement de phase (MCP) dans la matrice lors du changement de phase du matériau, possible utilisation dans un système d'échangeur à fluide(s), avec capacité pour le MCP de n'être pas en contact avec le(s) fluide(s), afin d'éviter les dispersions quand il est en phase liquide (ou gazeuse dans l'hypothèse où il serait ainsi dans l'une de ses phases). Le contact (l'interface) avec le(s) fluide(s) sera alors assuré par la matrice rigide structurante,

Prenant en compte cette problématique, il est d'abord proposé que la structure composite comprenne un élastomère ou des fibres, ceci donc outre au moins un MCP (et a priori plutôt un matériau à plusieurs MCP changeant de phases à des températures différentes). Avec un élastomère, on bénéficiera d'une capacité élevée de déformation, alors que les fibres seront utilisées pour leur plus faible densité et leur capacité importante d'imprégnation de MCP.

Dans l'option structure composite comprenant (au moins) un élastomère, il est proposé que l'élastomère soit choisi parmi les composés suivants : NR, IR, NBR, XNBR, HNBR, ECO, EPDM, EPM, CM, CSM, ACSM, CR, ACM, EVA, EAM, les copolymères éthylène-acide acrylique, les caoutchouc butyles, butyles halogènes et isobutylène-p-méthylstyrène parabromo- méthylstyrène, avec addition d'au moins un des agents modifiants suivants : polybutadiène-vinyle-1,2 greffé à l'anhydride maléique à l'acide carboxylique ou les polybutadiènes époxydés et/ou hydroxylés, des silanes, des copolymères éthylène- acide acrylique, des copolymères éthylènepropylène greffés à l'anhydride maléique.

Dans ce cas, il sera a priori préféré que :
- la compacité soit comprise entre 60 et 100%.
- la conductivité du corps composite soit comprise entre 0.5 et 3 W/m.K-1, de préférence entre 1 et 2 W/m.K-1, et
- la concentration en masse dans le corps composite du matériau à changement de phase soit comprise entre 40% et 70%, et de préférence entre 50% et 60%.

Dans l'option structure composite comprenant des fibres, il est proposé, pour une prise en compte toujours plus performante de la problématique précitée, que soit utilisé (au moins) un feutre de graphite.

Dans ce cas, il sera a priori préféré que la conductivité dans le sens des fibres de graphite du corps composite soit comprise entre 10 et 50 W/m.K-1, de préférence entre 20 et 40 W/m.K-1, et que la concentration en masse dans le corps composite du matériau à changement de phase soit comprise entre 20% et 95%, et de préférence entre 30% et 90%.

On notera encore que les structures précitées seront très utiles pour réaliser des boîtiers protecteurs ou doubler des blocs. Ainsi, est aussi concerné un boîtier comprenant :
- plusieurs structures comme précitées qui définiront des parois latérales du boîtier, et
- des blocs d'angles interposés chacun entre deux dites structures successives, qui les réuniront et qui seront traversés par des passages de communication entre lesdits creux des structures successives.

Autre cas : un boîtier comprenant des parois latérales et plusieurs structures comme précitées qui doubleront ces parois latérales.

L'invention sera si nécessaire mieux comprise et d'autres détails, caractéristiques et avantages de l'invention pourront apparaître à la lecture de la description suivante faite à titre d'exemple non limitatif en référence aux dessins annexés.

Dans ces dessins :
- la figure 1 schématise (en vue éclatée) des structures non conformes à celles
   de l'invention entre et autour d'une cellule de batterie, pour en assurer une gestion thermique périphérique ;
- les figures 2-5, 8, 10 et 12 schématisent différents exemples de telles structures non conformes à celles de l'invention;
- les figures 6,7 schématisent deux agrandissements locaux de la réalisation de la figure 5 ; et
- les figures 9, 11 schématisent deux agrandissements locaux des réalisations des figures 8 et 10, respectivement étant remarqué que les figures 4 à 11 montrent des structures opérationnelles, à éléments réunis, tandis que les figures 1, 13 à 17 sont des vues éclatées ;
- la figure 12 schématise un corps composite ou dite poche, de forme courbée ; ici à section sensiblement en U ou C ;
- les figures 13,14 schématisent deux exemples non couverts par les revendications respectivement avec joints et tubes additionnels à circulation de liquide, ces deux aspects pouvant être dissociés ;
- les figures 15,16 schématisent deux exemples non couverts par les revendications avec fourreau intermédiaire de circulation de fluide ;
- la figure 17 schématise un exemple non couvert par les revendications à plaque intermédiaire de fermeture latérale de canaux de circulation de fluide ;
- la figure 18 schématise un boîtier à deux panneaux latéraux intégrant des canaux de circulation de fluide,
- les figures 19 (en trois parties: haute, droite et gauche) et 20 schématisent la solution de la présente invention à plateau empilés, passages pour des cellules et canaux d'air,
- les figures 21,22 schématisent respectivement réuni et en éclaté un assemblage de gestion thermique de cellules prismatiques de batterie à double flux de fluides, respectivement en surface et à cœur,
- et la figure 23 schématise l'exemple non couvert par les revendications montrée figure 22, avec des feuilles d'isolation électrique additionnelles.

### DESCRIPTION DETAILLEE

Un but de la solution ici proposé est donc la réalisation performante de structures à inertie thermique (liée à la présence de MCP) et/ou isolation thermique (liée à la présence d'isolant thermique de type PIV) élevée(s) à fins de gestion thermique environnante, notamment d'une batterie d'accumulateurs.

De fait, la structure 1 proposée à cette fin comprend, comme illustré :
- un corps composite 3 contenant au moins un matériau 5 à changement de phase (MCP) dispersé dans une matrice 7 rigide structurante, de sorte que le corps composite est autoportant quelle que soit la phase du matériau à changement de phase contenu, et/ou
- une poche 9, plastique ou métallique, thermiquement conductrice, étanche au gaz et sous vide interne partiel, donc de type PIV, ayant une forme maintenue par le vide interne. Chaque poche 9 (ou 90 ci-après) pourra envelopper (donc contenir) du MCP 5.

Le corps composite 3 et/ou la poche 9 sont conformés pour localement présenter extérieurement au moins un dit creux 11 qui définit par lui-même une paroi 13 de canal pouvant convenir, voire qui est prévu, à la circulation d'un fluide 15, étant alors supposé que le canal créé est alors raccordé à une alimentation 17 et une récupération 19 de ce fluide, lequel peut être liquide ou gazeux, voir :

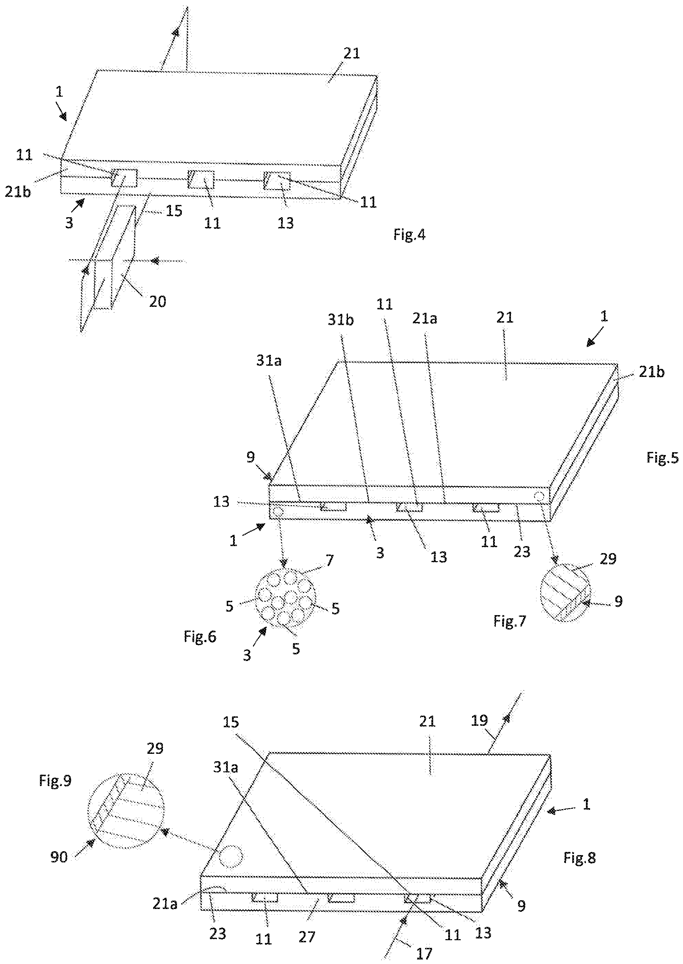

- figure 4 pour un exemple de circulation du fluide 15 en circuit fermé, avec passage dans un échangeur 20 où le fluide 15 pourrait soit se charger en/soit décharger des calories, ou des frigories,
- et figure 8, pour un exemple de circulation du fluide 15 en circuit ouvert.

Le fluide 15 peut être caloporteur ou frigorigène. Ce peut être un liquide.

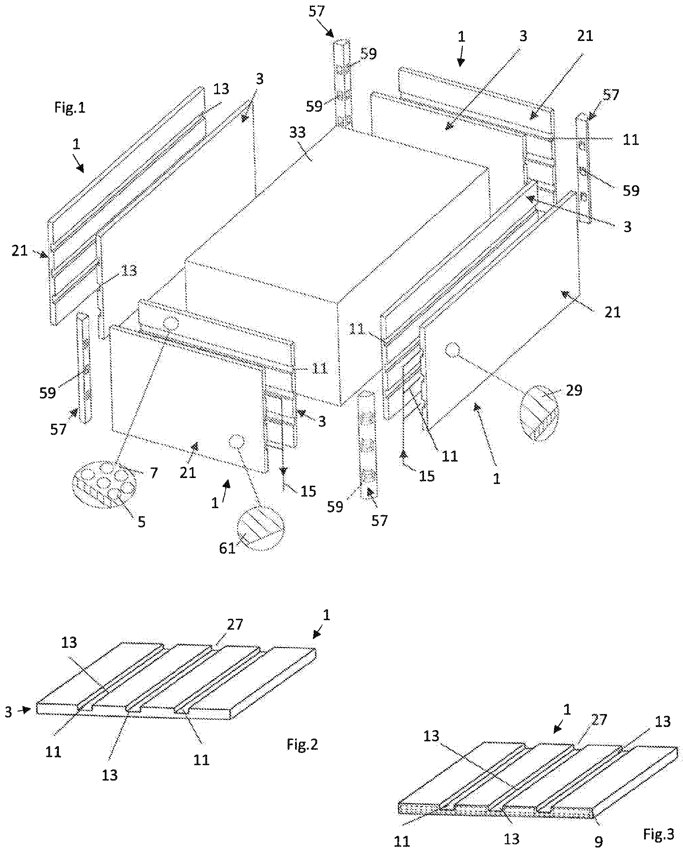

Si, comme illustré figures 2-3, la structure 1 ayant les caractéristiques précitées se limite à un corps composite 3 ou une poche 9, la paroi 13 du canal (le creux 11) pourra être fermée latéralement, et donc la structure complétée par au moins un couvercle 21:
- qui localement complètera (lui-même) la paroi 13, via une partie de sa surface 21a placée contre le corps composite 3 ou la poche 9,
- et qui sera fixé à ce corps composite ou à la poche de façon étanche vis-à-vis de la circulation du fluide.

Sur les figures, les éléments repérés comme un corps composite 3 ou une poche 9 ou un couvercle 21 peuvent être intervertis.

Ainsi, dans un ensemble ou une structure 1 pourvu d'un couvercle 21, au moins un des éléments pourra se présenter comme par exemple une plaque, sans dit creux, comme schématisé figures 5,8,10.

Pour la liaison avec ce couvercle, il est proposé que chaque corps composite 3 ou poche 9 présente latéralement des rebords 23 pour un appui du couvercle 21. Le couvercle 21 pourra alors être soudé avec le corps composite ou la poche, à l'endroit des rebords 23. Ainsi, on évitera a priori de souder sur les tranches des pièces, comme la tranche 21b du couvercle 21 figure 4,5.

De ce qui précède, on aura compris que toute forme faisant office de couvercle pour le de canal du fluide 15 conviendra.

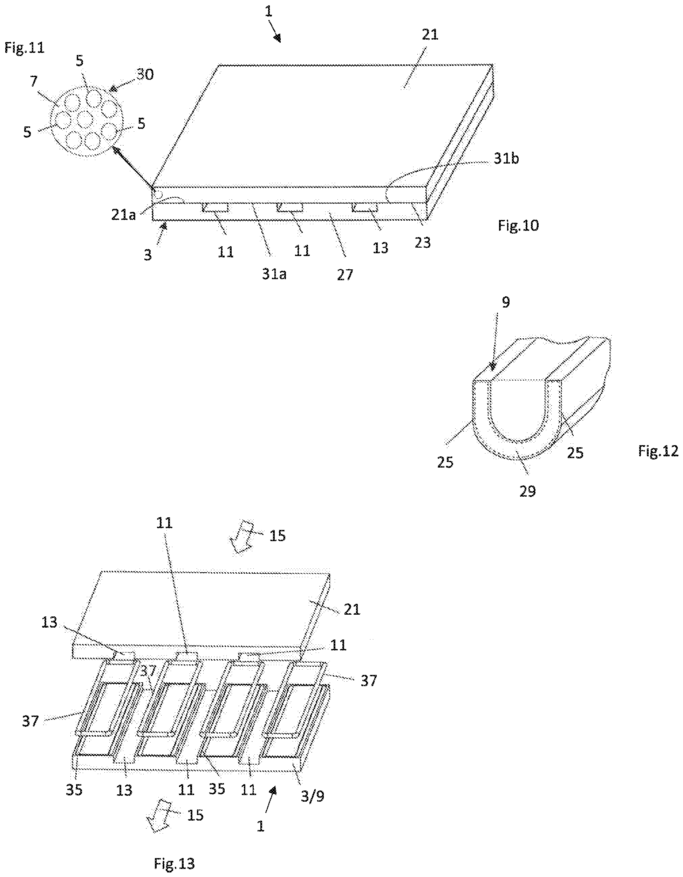

Toutefois, concernant la réalisation des couvercles, on pourra préférer, comme illustré figures 9,11, que chaque couvercle 21 comprenne au moins:
- un autre corps composite 30 autoportant quelle que soit la phase du matériau MCP contenu, et/ou
- une autre poche 90, PIV, plastique ou métallique, étanche donc au gaz et sous vide interne partiel, dont la forme sera maintenue par le vide interne.

Comme précédemment, cet autre corps composite 30 et/ou autre poche 90 sera alors conformé(es) pour localement compléter et fermer latéralement la paroi 13 du canal précité, donc chaque creux 11.

Comme déjà mentionné, il s'agira là d'une réponse intéressante aux difficultés actuelles à réaliser industriellement en grande série une structure permettant à la fois une circulation de fluide et un conditionnement soit d'un vide, soit de MCP.

Pour favoriser l'atteinte à la fois d'une rigidité intrinsèque certaine et la définition des canaux à fluide souhaités, il est par ailleurs proposé que chaque corps composite 3,30 ou dite poche 9,90 présente, comme illustré :
- une forme courbée, avec des angles 25 qui peuvent être arrondis (voir figure 12); et/ou,
- une forme crénelée dont certains au moins des créneaux 27 définissent plusieurs dits creux 11 (voir figures 3,10 par exemple).

On tirera en outre bien parti de ces créneaux et angles en prévoyant par ailleurs que, pour fermer latéralement chaque canal (donc chaque creux 11), le couvercle 21 et le corps composite autoportant 3 ou la poche 9 :
- présentent entre eux des soudures étanches, à l'endroit de tronçons respectifs, tels 31a,31b, de parois bordant les canaux,
- et soient en appui deux à deux, y compris à l'endroit desdits tronçons respectifs de parois, tels 31a,31b, intercalés donc entre deux canaux consécutifs, ou situés de part et d'autre des canaux latéralement extérieurs.

Dans les poches 9 ou 90, on pourra utilement avoir placé un matériau dit thermiquement isolant (voir ci-avant) 29, ceci pouvant même renforcer la tenue intrinsèque des poches sous vide.

Concernant le choix dans la réalisation des corps composites 3,30, il pourra être suivi les recommandations suivantes, en particulier pour répondre à un besoin de maintien en température de cellules ou boîtiers d'une batterie 33 de véhicule électriques ou hybrides ; cf. figure 1 où chaque structure 1 comprend dans l'exemple deux parties 3,21 intégrant chacune directement une série de canaux (creux 11 à parois 13), ici parallèles, de circulation de fluide 15, lequel arrive et repart via un circuit externe.

En effet, notamment les cellules lithium-ion sont fortement impactées par le paramètre température. Une mauvaise prise en compte de celle-ci peut avoir de lourdes conséquences sur la durée de vie des cellules de la batterie, sur leurs performances (capacité et puissance délivrée), leur stabilité et ainsi que sur la sécurité d'utilisation.

D'abord, même si le changement d'état liquide-gaz et inverse des MCP est intéressant en termes de quantité d'énergie mise en jeu, le changement d'état privilégié dans les applications visées pourra être solide-liquide et inverse.

Ensuite, pour demeurer sur l'exemple des cellules lithium-ion, la plage de température dans laquelle elles doivent être maintenues pour fonctionner de manière optimale est comprise entre 25 et 35°C.

Or, outre les matériaux utilisés pour les éléments participant à la gestion thermique et la disposition de ceux-ci en couches pouvant combiner MCP et isolants thermiques (voir par exemple WO2017153691), prévoir une circulation de fluide au sein de cette architecture, typiquement entre deux couches de matériaux, peut s'avérer nécessaire ; voir canaux 55 dans ce document.

Pouvoir faire circuler un fluide 15, avec des canaux branchés par exemple sur un circuit d'air extérieur, entre les entrée/alimentation17 et sortie/récupération 19, sera alors requis, dans une structure telle que celle 1 ici présentée.

Outre réaliser ceci avec la solution qui précède, on a aussi souhaité définir une constitution de corps composite 3 performante, comme évoqué ci-avant, dès lors que c'est la nature même de ce corps qui assurera les critères de performance thermique, d'autoportance et de facilité de mise en forme ou de découpe attendus.

Aussi est-il proposé deux solutions, respectivement à base élastomère ou fibres, chacune avec donc en outre a priori plusieurs MCP changeant de phases à des températures différentes.

A noter que les matériaux à changement de phase utilisés dans le seront alors favorablement formulés afin de les inclurent dans des matrices avec une quantité massique de MCP dans la formulation typiquement comprise entre 30 et 95%.

Les formulations utiliseront de préférence des matériaux micro-encapsulé ou purs dont les transitions de phase pourront être comprises, pour les applications batterie, entre -10 et 110°C (en fonction en particulier des électrochimies, lithium-ion ou non).

Dans le cas de l'application Lithium-ion, on pourra prévoir des MCP micro-encapsulés avec un pourcentage massique sur produit formulé de 35 à 45 %. Ces MCP seront favorablement inclus dans une matrice en silicone contenant notamment des charges ignifugeantes et conductrices thermiques.

Dans la première des deux solutions précitées, la matrice 7 comprend (au moins) un élastomère, ceci permettant d'adapter le corps 3 à des situations pouvant nécessiter une mise sous tension mécanique ou le suivi de formes complexes (aspect élastique de l'élastomère), avec des masses peu importantes.

Dans la seconde solution, la matrice 7 comprend des fibres.

En termes de mise en œuvre, on pourra en particulier prévoir que plusieurs structures 1 soient installés entre deux cellules adjacentes et/ou sur différentes faces et en périphérie du compartiment de la batterie pour l'envelopper.

On pourra ainsi prévoir, en partant de la surface du compartiment de batterie, quatre couches de matériau à changement de phase (plusieurs MCP) entre lesquelles auront été installées des circulations du fluide 15 (air par exemple). Sur la face extérieure des éléments MCP aura été installé l'isolant sous vide, soit typiquement une ou plusieurs poches 9 ou 90. Une enveloppe périphérique thermiquement conductrice pourra permettre la tenue mécanique et la protection du système dans son ensemble.

A noter que les deux solutions ci-avant permettent d'assurer que du MCP ne soit pas en contact direct avec le fluide et qu'il n'y ait pas de fuite de MCP à l'état fluide.

De façon générale une solution à corps composite comme ci-avant va pouvoir travailler dynamiquement : sur un véhicule électrique ou hybride, typiquement à un moment de forte demande, comme par exemple lors d'un démarrage sous entrainement électrique en hiver (température extérieure de 3/4°C par exemple) on va en effet pouvoir faire circuler de l'air (venant de l'extérieur) au travers des creux 11 qui vont donc permettre à cet air de réchauffer le MCP, en ayant au passage récupéré de l'énergie thermique sur les cellules de la batterie, l'air pouvant ensuite être redirigé vers l'environnement extérieur. Lors de son parcours, l'air aura donc à la fois réchauffé le(s) MCP et évacué un excès de chaleur des cellules de la batterie. Autre hypothèse : en hiver, lors du fonctionnement des cellules, de l'air refroidi par un circuit de climatisation est projeté vers ces cellules. Cet air soufflé passe ensuite au travers des canaux 11.

Concernant maintenant la fabrication des corps composite 3,30, on notera qu'ils pourront se présenter comme des plaques comprenant du graphite fibreux compressé, en tant que matrice 7 structurante, dans laquelle sera imprégné du MCP qui pourra être, ou comprendre, de la paraffine.

Les feutres de graphite pourront être obtenus par exfoliation. S'il y a une enveloppe, elle sera thermiquement conductrice (feuille plastique par exemple). La matrice imprégnée ne relarguera pas de MCP si elle n'est pas contrainte. Et pour obtenir un corps composite à paroi de canal intégré, on pourra simplement mouler ou usiner le corps composite brut. La solution à poche sous vide pourra s'obtenir par pliage.

Figure 13, un exemple non couvert par les revendications propose que la structure 1, qui comprend le corps composite 3 et un couvercle 21 comprenant lui-même au moins un autre dit corps 30 composite, comprend en outre des gorges 35 dans le corps composite 3 et/ou dans le couvercle 21. Les gorges 35 reçoivent des joints 37 pour une étanchéité au fluide entre lesdits corps, en bordure des creux 11. Dans l'exemple, le fluide 15 est en contact direct avec les parois 13 de canaux.

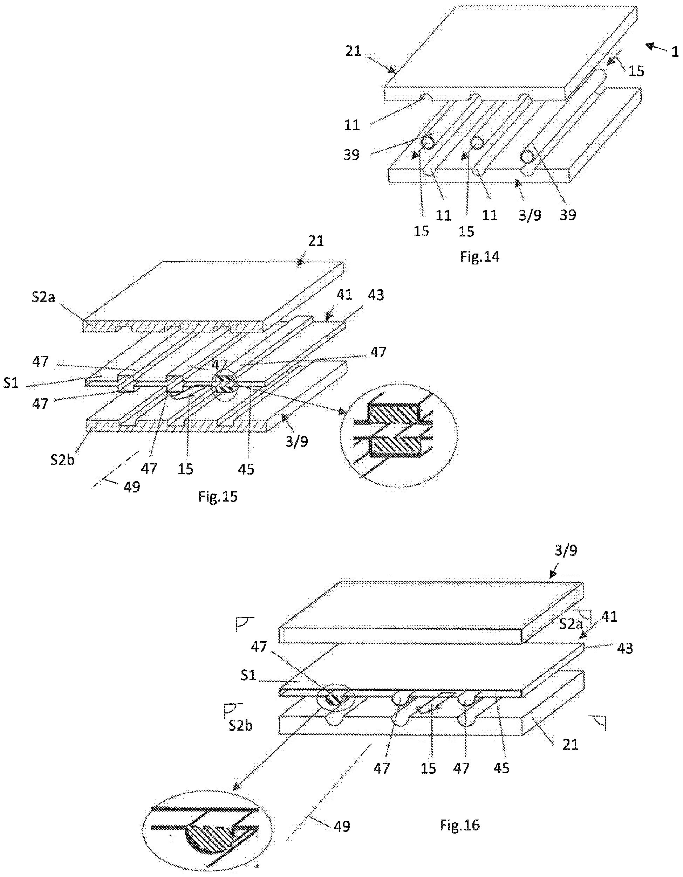

La solution alternative de la figure 14 propose que la structure 1 comprenne des tubes 39 de circulation d'un liquide, en tant que fluide 15. Les tubes 39 sont individuellement reçus dans les creux 11 qui se font face. Ils sont en un matériau favorisant les échanges thermiques avec l'intérieur des éléments 3,9,21 pour que ceci s'opère au passage du fluide.

La solution alternative des figures 15,16 propose que la structure 1 comprenne un fourreau 41 de circulation dudit fluide 15. Le fourreau 41 présente une entrée 43 et une sortie 45 pour le fluide. Il intègre plusieurs dépressions 47 allongées saillantes vers l'extérieur. Ces dépressions 47 sont reçues (calées) dans les creux 11 qui se font face. Le fourreau 41 est fixé directement ou non (par exemple par collage entre eux des panneaux 21 et 3 (ou 9) de part et d'autre du fourreau) entre le couvercle 21 et le corps composite ou ladite poche. Transversalement à une direction 49 générale d'allongement des dépressions 47, et donc des creux 11 :
- le fourreau 41 occupe une section fermée S1 (voir section définie par le trait gras figures 15,16) comprise entre 30 et 100% de la section cumulée desdits couvercle 21 et corps composite ou poche (voir sections respectives hachurées S2a et S2b figures 15,16), et
- dans cette section fermée S1, les dépressions 47 occupent une section minoritaire, de préférence entre 5 et 20% de ladite section totale S1 du fourreau (voir hachures dans le fourreau figure 15). Le fourreau est en un matériau favorisant les échanges thermiques avec l'intérieur des éléments 3,9,21 pour que ceci s'opère au passage du fluide qui va donc circuler dans tout le fourreau (section S1).

Les dépressions 47 allongées peuvent être sur les deux grandes faces du fourreau si les panneaux ou structures 3 ou 9 et 21 sont tous deux pourvus de creux 11 (figure 15), ou sur une seule face si seule une des structures 3 ou 9 et 21 en est pourvue (figure 16).

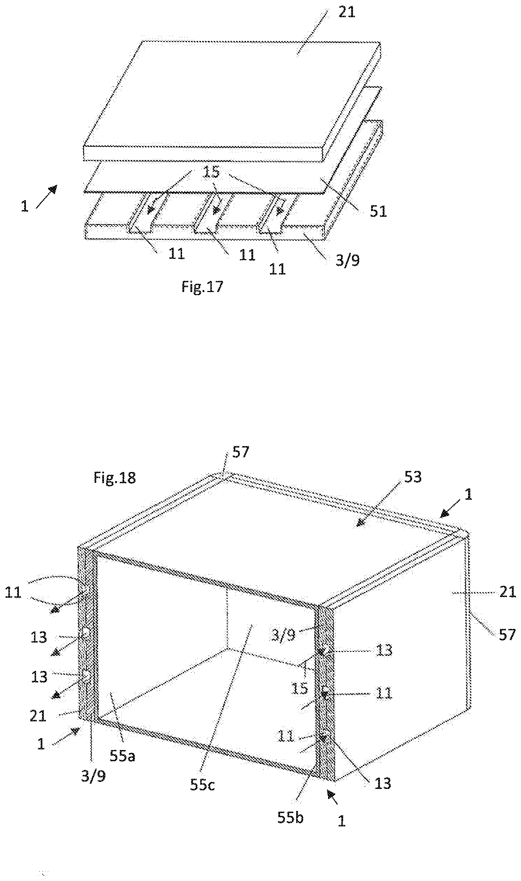

L'intérêt d'un fourreau par rapport à une solution à tubes indépendants ou à plaque 51, comme figures 14 ou 17, peut être une sécurité d'étanchéité ; on n'a plus non plus besoin que le couvercle 21 soit fixé avec le corps composite (3) ou la poche (9), de façon étanche au fluide. Dans la solution à fourreau, on peut miser sur une mise en place groupée, un auto-centrage et une section de passage du fluide 15 non limitée aux zones creuses (toute la section S1 est concernée, pas seulement celle des dépressions 47).

La solution alternative de la figure 17 propose que la structure 1 comprenne une plaque 51 de fermeture latérale des creux 11 et donc des parois 13 de canaux. La plaque 51, plane et pleine, est interposée de façon étanche au fluide entre ledit au moins un couvercle 21 et le corps composite 3 (ou ladite poche 9). Si tant le couvercle 21 que le corps composite 3 (ou ladite poche 9) présentaient des creux 11, la plaque 51 pourrait permettre de faire circuler deux fluides 15 différents, de part et d'autre de la plaque, dans les creux 11 respectifs. Si des tubes 39 de circulation d'un liquide, en tant que fluide 15. Les tubes 39 sont individuellement reçus dans les creux 11 qui se font face. Ils sont en un matériau favorisant les échanges thermiques avec l'intérieur des éléments 3,9,21 pour que ceci s'opère au passage du fluide.

La figure 18 permet quant à elle de schématiser un exemple non couvert par les revendications à boîtier 53 dont certaines au moins des parois latérales, trois adjacentes 55a,55b,55c dans l'exemple, sont doublées, ici extérieurement, par des panneaux latéraux 1 intégrant des (parois de) canaux 13 de circulation de fluide et des blocs 57 d'angles de liaison fluide entre deux canaux de panneaux adjacents. Les flèches marquent les entrées et sorties du fluide 15, respectivement depuis et vers une source, à l'image de ce que montre la figure 1. Dans les exemples des figures 1 et 18, les blocs 57 d'angles sont disposés aux coins, entre deux panneaux latéraux, ou structures, 1 adjacents disposés pour former entre eux un angle et que les parois latérales 57a,57b de chaque bloc 57 d'angle permettent de réunir. Pour la circulation du fluide, chaque bloc 57 d'angle intègre des conduits 59 à connecter individuellement aux canaux 11 qui lui font face. Chaque conduit 59 est incurvé pour que le fluide passe l'angle correspondant. De préférence, chaque bloc 57 d'angle sera en matériau isolant thermique (mousse PU par exemple).

Dans une application telle qu'une batterie 33, où la gestion thermique peut concerner tant une partie d'un tout (une cellule de la batterie) que le tout (l'ensemble des cellules de la batterie), l'élément 33,53 des solutions précitées présentées en liaison avec les figures 1 et 18 peut concerner tant une cellule que l'ensemble de ces cellules. Dans ce dernier cas, les panneaux latéraux, ou structures, 1 entoureraient l'ensemble des cellules, ce qui n'empêcherait pas que chaque cellule puisse être entourée par un autre groupe de panneaux latéraux, ou structures, 1 alimenté en fluide, lequel pourra être ou non le même que celui 15 précité.

A noter aussi que le couvercle 21 ou l'autre élément d'un panneau, ou structure, 1 à corps 3 ou poche 9 pourra comprendre un matériau isolant thermique 61 non sous vide interne partiel (mousse PU par exemple), donc non PIV (voir figure 1).

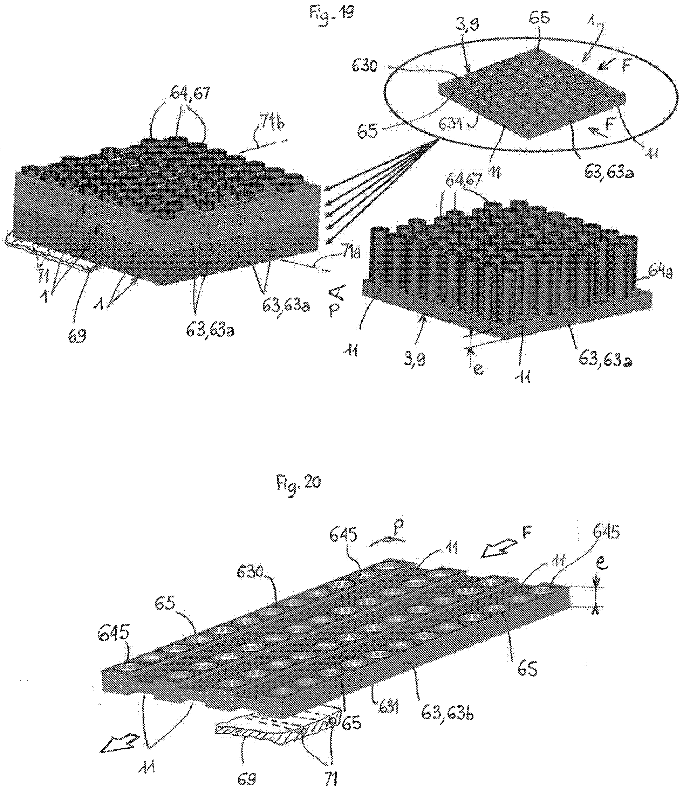

Les figures 19,20 schématisent deux variantes d'une de structure 1 selon l'invention qui comprend une série de dits corps composite 3 et/ou poches 9 définissant chacun un plateau 63, dans deux versions 63a (figure 19), ou 63b (figure 20).

L'objectif est de réaliser un ensemble permettant de refroidir par exemple par air pulsé des cellules 64 de batterie de véhicule, en favorisant leur gestion thermique dans leur gamme de température optimale de fonctionnement, évitant les zones mortes et températures non homogènes.

A cette fin, chaque plateau 63 présente une épaisseur (e) et sur au moins une des faces 630, des canaux formés par les creux 11 précités. Ces canaux s'étendent tout le long de la face concernée et débouchent individuellement sur deux tranches opposés du plateau.

En outre, entre les canaux 11, des passages 65 sont formés dans l'épaisseur (e) du plateau 63 pour recevoir des éléments extérieurs 67 (en l'espèce les cellules 64) à placer en échange thermique avec le fluide F à faire circuler dans les canaux 11. Ainsi, les éléments extérieurs 64,67 à stocker le sont transversalement au plan P de chaque plateau et le flux de fluide F circule dans ce plan, sur la plus surface grande possible.

Chaque plateau pourra ainsi être défini par un élément de PCM moulé intégrant les passages 65 et les canaux 11, de là une facilité d'assemblage (vue de gauche figure 19), une intégration des canaux de fluide (vue du haut figure 19) et un choix aisé du changement de phase du PCM proche de la température de fonctionnement des cellules.

Typiquement, si les cellules 64 se présentent comme des sortes de « piles cylindriques » comme illustré, de forme chacune tubulaire, les plateaux seront favorablement empilés, parallèlement, et les uns en appui sur les autres entre les canaux 11 d'une même dite face, de sorte qu'un dit plateau 63 forme un couvercle pour le plateau adjacent 63, en créant ainsi desdits canaux à section fermée.

Pour augmenter les échanges thermiques, on conseille que les plateaux 63 comprennent des canaux 11 disposés dos à dos, sur les deux faces 630,631 opposées suivant l'épaisseur (e) de chaque plateau.

Et pour le positionnement et le maintien des cellules 64, les passages 65 traversent toute l'épaisseur (e) des plateaux 63 et les cellules 64 sont individuellement disposées dans les passages 65 successifs de ces plateaux 63 empilés qu'elles traversent. Une plaque support inférieure 69 peut soutenir la pile et les cellules 64. Il peut s'agir d'une plaque de refroidissement creusée d'autres canaux 71 pour qu'y circule un liquide de refroidissement, en échange thermique avec chaque cellule 64, à sa base 64a ; vue de droite figure 19 et figure 20.

Dans la version de la figure 20, les canaux 11 sont tous parallèles les uns aux autres. Dans celle de la figure 19, les canaux 11 s'étendent suivant plusieurs directions (71a,71b) de façon à se croiser et sont disposés en quinconce, dans une des directions, celle 71b dans l'exemple (vue du haut figure 19).

En liaison avec une solution que l'on voit schématisée figures 19 20 un autre aspect de l'invention vise à assurer une gestion thermique particulièrement fine et efficace d'une batterie électrique de véhicule, telle celle de la figure 19 avec ses cellules cylindriques .

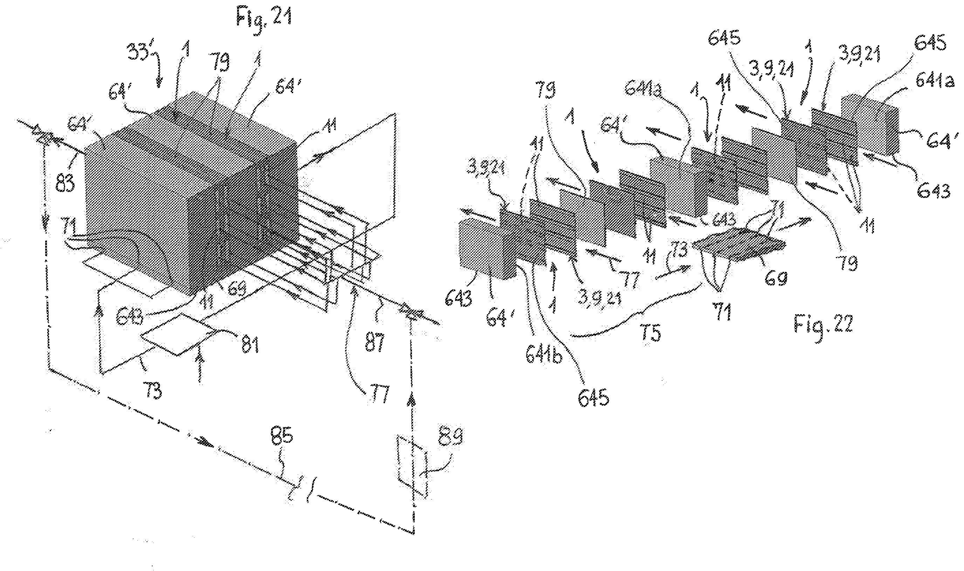

Selon un exemple non couvert par les revendications, il est proposé des structures de gestions thermiques telles qu'évoquées dans WO 2017153691, voir figures 21, 22, avec un assemblage comprenant:
- plusieurs structures 1 comme déjà présentées, avec toute ou partie de leurs caractéristiques, et donc individuellement à corps composite 3 ou poche 9 ou couvercle 21,
- plusieurs cellules 64' de batterie électrique de véhicule et
- une dite plaque de refroidissement 69 disposée en échange thermique avec les cellules 64' sur des dits deuxièmes côtés 643 de celles-ci.

La plaque de refroidissement 69 est thermiquement conductrice et présente des conduits (ici internes) 71 qui sont reliés à une dite deuxième alimentation 73 en un fluide à faire circuler dans lesdits conduits 71, pour un échange thermique de surface avec les cellules 64'. A ce sujet, on note que ceci est aussi prévu dans la solution des figures 19,20. On appelle « échange thermique de surface » cet échange thermique car la plaque de refroidissement 69 est contre une face de limite extérieure de la batterie. Elle n'est pas entre deux cellules comme le sont les structures 1. Dans l'exemple, chaque cellule et la batterie dans son ensemble reposent sur la plaque de refroidissement 69.

Par ailleurs, dans cette solution, entre deux premiers côtés opposés (respectivement 641a et 641b figure 22) d'au moins deux cellules 64' successives existe un espace 75 où est interposée, en échange thermique avec les cellules, au moins une dite structure (1 ;3,9,21), avec ses creux 11 formant canaux qui sont reliés à une dite première alimentation 77 en un fluide à faire circuler dans lesdits canaux 11, au cœur de l'espace 75, entre les cellules 64'. Les premier et deuxième fluides, respectivement des alimentations 77,73, ne se croisent pas ; leurs circulations sont indépendantes ; de là la possibilité de deux fluides différents.

Si figure 22 on voit bien l'espace 75, du fait de la vue éclatée, chaque espace est, une fois l'assemblage réalisé, occupé par au moins une structure 1. Les structures (1 ;3,9,21) et cellules 64'sont plaquées les unes contre les autres, dans une direction d'empilement (ici horizontale). Dans le mode de réalisation retenu, chaque espace 75 est occupé, d'une cellule à la suivante, par deux structures 1, un bloc isolant thermique 79, puis encore deux structures 1.

La deuxième alimentation 73 en fluide sera utilement celle d'un liquide, tel de l'eau, car l'étanchéité et les branchements sont plus simples à assurer que pour la première alimentation 77. En outre, ceci sera plus efficace dès lors que l'on est sur un « échange thermique de surface ». Cette deuxième alimentation 73 en fluide sera par ailleurs utilement branchée en circuit fermé, via une pompe 81 ; figure 21.

Après être sortie (en 83 figure 21) dudit assemblage, les conduits réunis de ladite première alimentation 77 pourront, via un conduit 85 et des vannes adaptées, être bouclés sur l'entrée 87, pour assurer un recyclage du fluide, quitte à le faire passer dans un échangeur thermique 89, notamment pour souffler à certains moments dans les canaux 11 un fluide suffisamment froid pour faire revenir à l'état solide les MCP, dans une hypothèse de MCPs à deux phases : solide et liquide.

La deuxième alimentation 73 en fluide utilisera utilement un fluide gazeux, tel de l'air. On préfèrera que la circulation de ce fluide dans l'assemblage soit forcée (ventilateur ou autre).

De nouveau pour une qualité d'échange thermique et une optimisation réfléchie de la gestion thermique assurée par lesdites circulations de fluides, en liaison avec les MCPs présents, il est conseillé que chaque corps composite (3) ou poche (9) présente, en face des cellules 64' (mais ceci peut aussi s'appliquer par exemple sur les cellules 64 de la précédente solution), une surface pleine, continue, 645 pour des échanges thermiques non-discrets avec les cellules. On aura compris qu'à l'inverse un contact discret est comme des zones séparées, sans continuum.

Ainsi, dans la précédente solution, les surfaces 645 étaient formées par des faces cylindriques pleines. Dans la solution des figures 21,22, les surfaces 645 sont planes, comme le sont en face les parois 641a et 641b des cellules. Ainsi, on peut prévoir qu'en face d'une dite cellule (64 ou 64' par exemple) chaque corps composite (3) ou poche (9) soit plaquée en contact surfacique contre la cellule, sans circulation ventilée (forcée) de fluide entre eux.

Croiser les flux des premier et deuxième fluides (toujours sans les mélanger) pourrait améliorer encore l'efficacité des échanges thermiques.

Par ailleurs, pour contrer les transferts thermiques d'une dite cellule 64', il est proposé dans la solution pour cellules prismatiques (figures 21,22), d'interposer un bloc isolant thermique 79 entre deux corps composites (3) ou poches (9) eux-mêmes donc interposés entre deux dites cellules 64'.

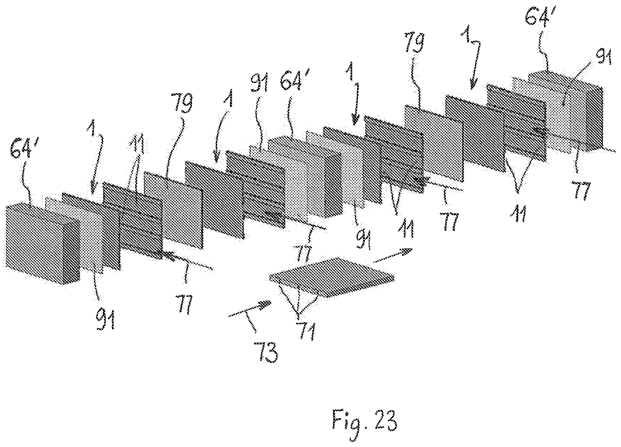

Dans la solution de la figure 23, qui reprend les caractéristiques de la solution précédente (figures 21,22), on a adjoint des feuilles d'isolation électrique 91, chacune interposée entre une structure 1 et une cellule 64'.

Les feuilles d'isolation électrique 91 ont pour objectif, dans le cas où le PCM des corps composites (3) ou poches (9) serait conducteur électrique, d'éviter les courts circuits. Il n'est pas obligatoire de mettre en place ce composant, tout dépend des caractéristiques du matériau PCM mais également de l'effet voulu : isolation électrique souhaitée ou non.

Si les feuilles d'isolation électrique 91 sont prévues, on aura, pour l'efficacité de l'isolation électrique, avantage à ce que les surfaces de contact entre les éléments 1,91,64' soient plans et continus ; de là le conseil de surfaces planes sur les deux faces opposées des feuilles d'isolation électrique 91 et sur la face de la structure 1 (corps composite 3 ou poche 9) orientée vers la feuille d'isolation électrique 91 qui lui est adjacente ; voir figure 23.

## Revendications

1. Structure comprenant au moins un élément (1) de gestion thermique comprenant :
- un corps composite (3) contenant au moins un matériau (5) à changement de phase (MCP) dans une matrice (7) rigide structurante, de sorte que le corps composite est autoportant quelle que soit la phase du matériau à changement de phase contenu,
le corps composite (3) étant conformé pour localement présenter extérieurement au moins un dit creux (11) qui définit par lui-même une paroi (13) de canal pouvant convenir à la circulation d'un fluide,
le corps composite (3) définissant un plateau (63,63a, 63b) qui présente une épaisseur (e) et sur au moins une des faces duquel s'étendent les canaux formés par les creux (11), **caractérisé en ce que** entre les canaux, des passages (65) sont formés dans l'épaisseur (e) du plateau (63,63a, 63b) pour recevoir des éléments extérieurs (67) à placer en échange thermique avec le fluide à faire circuler dans les canaux.

2. Structure selon la revendication 1, dans laquelle la matrice (7) rigide structurante comprend un élastomère ou des fibres.

3. Structure selon la revendication 1 ou 2, dans laquelle la matrice (7) rigide structurante comprend un feutre de graphite.

4. Ensemble de structures comprenant plusieurs structures (1), individuellement selon l'une quelconque des revendications précédentes dans lesquelles lesdits canaux (11) sont disposés dos à dos, sur deux faces de chaque plateau opposées suivant l'épaisseur (e), les plateaux étant empilés, les uns en appui sur les autres entre les canaux d'une même dite face, de sorte qu'un dit plateau forme un couvercle pour le plateau adjacent, en créant ainsi desdits canaux à section fermée.

5. Ensemble selon la revendication 4, qui comprend en outre un fourreau (41) de circulation dudit fluide qui :
- présente une entrée (43) et une sortie (45) pour le fluide,
- intègre plusieurs dépressions (47) allongées calées dans plusieurs dits creux (11),
- est disposé entre deux plateaux successifs.

6. Ensemble selon la revendication 4 ou 5, dans lequel les canaux (11) sont tous parallèles les uns aux autres.

7. Ensemble selon la revendication 4 ou 5, dans lequel les canaux (11) s'étendent suivant plusieurs directions (71a,71b) de façon à se croiser et sont disposés en quinconce, dans une des directions,

8. Assemblage comprenant :
- l'ensemble selon l'une quelconque des revendications 4 à 7, dans lequel les passages (65) traversent les plateaux (63,63a, 63b), et
- en tant que dits éléments extérieurs (67), des cellules (64) d'une batterie électrique de véhicule disposées dans les passages (65) successifs des plateaux (63,63a, 63b) empilés.

9. Assemblage selon la revendication 8:
- dans lequel les cellules (64) sont disposées en échange thermique avec les plateaux sur des premiers côtés des cellules, les canaux (11) étant reliés à une première alimentation (77) en fluide à faire circuler dans lesdits canaux, et
- qui comprend en outre une plaque de refroidissement (69) disposée en échange thermique avec les cellules (64) sur des deuxièmes côtés (64a) de celles-ci, la plaque de refroidissement présentant des conduits (71) qui sont reliés à une deuxième alimentation (73) en un fluide à faire circuler dans lesdits conduits, pour un échange thermique de surface avec les cellules (64).

10. Assemblage selon la revendication 9:
- dans lequel les cellules (64), qui sont cylindriques, s'étendent dans les passages (65) successifs des plateaux (63,63a, 63b) empilés jusqu'à une base (64a) de chaque cellule, et
- la plaque de refroidissement (69) est disposée en échange thermique avec les bases (64a) des cellules (64).

## Patentansprüche

1. Struktur mit zumindest einem Wärmemanagementelement (1), enthaltend:
einen Verbundkörper (3), der zumindest ein Phasenwechselmaterial (5) in einer strukturierenden starren Matrix (7) enthält, so dass der Verbundkörper unabhängig von der Phase des enthaltenen Phasenwechselmaterials selbsttragend ist,
wobei der Verbundkörper (3) so geformt ist, dass er bereichsweise außen zumindest einen sogenannten Hohlraum (11) aufweist, der seinerseits die Wandung (13) eines Kanals definiert, der sich für die Strömung eines Fluids eignen kann,
wobei der Verbundkörper (3) eine Platte (63, 63a, 63b) definiert, die eine Dicke (e) aufweist, und auf zumindest einer ihrer Seiten die von den Hohlräumen (11) gebildeten Kanäle verlaufen,
**dadurch gekennzeichnet, dass**
zwischen den Kanälen in der Dicke (e) der Platte (63, 63a, 63b) Durchgänge (65) zum Aufnehmen von äußeren Elementen (67) ausgebildet sind, die in Wärmeaustausch mit Fluid anzuordnen sind, das in den Kanälen strömen soll.

2. Struktur nach Anspruch 1,
wobei die strukturierende starre Matrix (7) ein Elastomer oder Fasern enthält.

3. Struktur nach Anspruch 1 oder 2,
wobei die strukturierende starre Matrix (7) einen Filz aus Graphit enthält.

4. Strukturanordnung mit mehreren Strukturen (1), jeweils nach einem der vorhergehenden Ansprüche, in denen die Kanäle (11) Rücken an Rücken auf zwei in der Dicke (e) gegenüberliegenden Seiten jeder Platte angeordnet sind, wobei die Platten gestapelt sind und zwischen den Kanälen auf derselben Seite aneinander liegen, so dass eine Platte eine Abdeckung für die angrenzende Platte bildet, wodurch Kanäle mit geschlossenem Querschnitt geschaffen werden.

5. Anordnung nach Anspruch 4,
ferner enthaltend eine Hülse (41) für die Strömung des Fluids, die
- einen Einlass (43) und einen Auslass (45) für das Fluid aufweist,
- mehrere längliche Vertiefungen (47) integriert, die in mehreren Hohlräumen (11 ) festgelegt sind,
- zwischen zwei aufeinanderfolgenden Platten angeordnet ist.

6. Anordnung nach Anspruch 4 oder 5,
wobei die Kanäle (11) alle parallel zueinander verlaufen.

7. Anordnung nach Anspruch 4 oder 5,
wobei die Kanäle (11) sich in mehreren Richtungen (71a, 71b) so erstrecken, dass sie sich kreuzen, und in einer der Richtungen versetzt angeordnet sind.

8. Baugruppe, enthaltend:
- die Anordnung nach einem der Ansprüche 4 bis 7, wobei die Durchgänge (65) die Platten (63, 63a, 63b) durchqueren, und
- als äußere Elemente (67) Zellen (64) einer elektrischen Fahrzeugbatterie, die in den aufeinanderfolgenden Durchgängen (65) der gestapelten Platten (63, 63a, 63b) angeordnet sind.

9. Baugruppe nach Anspruch 8,
- wobei die Zellen (64) in Wärmeaustausch mit den Platten auf ersten Seiten der Zellen angeordnet sind, wobei die Kanäle (11) mit einem ersten Zulauf (77) für ein Fluid verbunden sind, das in den Kanälen strömen soll, und
- ferner enthaltend eine Kühlplatte (69), die in Wärmeaustausch mit den Zellen (64) auf zweiten Seiten (64a) derselben angeordnet ist, wobei die Kühlplatte Leitungen (71) aufweist, die mit einem zweiten Zulauf (73) für ein Fluid verbunden sind, das in den Leitungen strömen soll, um einen Oberflächenwärmeaustausch mit den Zellen (64) zu bewirken.

10. Baugruppe nach Anspruch 9,
- wobei die Zellen (64), die zylindrisch ausgeführt sind, sich in den aufeinanderfolgenden Durchgängen (65) der gestapelten Platten (63, 63a, 63b) bis zu einem Basisteil (64a) jeder Zelle erstrecken, und
- wobei die Kühlplatte (69) in Wärmeaustausch mit den Basisteilen (64a) der Zellen (64) angeordnet ist.

## Claims

1. A structure comprising at least one thermal management element (1) comprising :
- a composite body (3) containing at least one phase change material (5) disposed in a rigid structuring matrix (7), such that the composite body is self-supporting regardless of the phase of the phase change material contained,
the composite body (3) being shaped to locally present externally at least one said cavity (11) which defines by itself a wall (13) of a channel suitable for circulating a fluid,
the composite body (3) defining a tray (63, 63a, 63b) which has a thickness (e) and on at least one of whose faces extend the channels formed by the cavities (11),
**characterized in that**, between the channels, passages (65) are formed in the thickness (e) of the tray (63,63a,63b) to receive external elements (67) to be placed in thermal exchange with the fluid to be circulated in the channels.

2. The structure according to claim 1, wherein the rigid structuring matrix (7) comprises an elastomer or fibers.

3. The structure according to claim 1 or 2, wherein the rigid structuring matrix (7) comprises a graphite felt.

4. A set of structures comprising a plurality of structures (1), individually according to any one of the preceding claims in which said channels (11) are arranged back to back, on two faces of each tray opposite each other according to thickness (e), the trays being stacked, applied one on top of the other between the channels of a same of said faces, so that one said tray forms a cover for the adjacent tray, thus creating said channels which each have a closed section.

5. The set according to claim 4, which further comprises a sheath (41) which is adapted for circulating said fluid and which :
- has an inlet (43) and an outlet (45) for the fluid,
- integrates several elongated depressions (47) wedged in several of said cavities (11),
- is placed between two successive trays.

6. The set according to claim 4 or 5, wherein the channels (11) are all parallel to each other.

7. The set according to claim 4 or 5, wherein the channels (11) extend in several directions (71a, 71b) so as to cross each other and are arranged in a staggered manner in one of the directions,

8. An assembly comprising :
- the set according to any one of claims 4 to 7, wherein the passages (65) pass through the trays (63,63a,63b), and
- as said external elements (67), cells (64) of a vehicle electric battery arranged in the successive passages (65) of the stacked trays (63, 63a, 63b).

9. The assembly according to claim 8:
- wherein the cells (64) are arranged in thermal exchange with the trays on first sides of the cells, the channels (11) being connected to a first supply (77) of fluid to be circulated through said channels, and,
- which further comprises a cooling plate (69) arranged in thermal exchange with the cells (64) on second sides (64a) thereof, the cooling plate having ducts (71) which are connected to a second supply (73) of a fluid to be circulated through said ducts, for a surface thermal exchange with the cells (64).

10. The assembly according to claim 9:
- wherein the cells (64), which are cylindrical, extend through successive passages (65) of the stacked trays (63, 63a, 63b) up to a base (64a) of each cell, and,
- the cooling plate (69) is arranged in thermal exchange with the bases (64a) of the cells (64).
